# EUROPEAN PATENT APPLICATION

(11) **EP 4 826 960 A1**
(43) Date of publication of application: **21.10.2026**
(21) Application number: 24903598.1
(22) Date of filing: 05.12.2024
(51) Int. Cl.: H02K 1/00, H02K 3/50

(54) **STATOR AND MOTOR**

(30) Priority: 12.12.2023 JP 2023209469
(71) Applicant: DENSO CORPORATION, Kariya-city, Aichi 448-8661 (JP)
(72) Inventor: MARUYAMA, Tetsuya, Kariya-city, Aichi 448-8661 (JP); USAMI, Hiroaki, Kariya-city, Aichi 448-8661 (JP); TANIE, Ryo, Kariya-city, Aichi 448-8661 (JP)
(74) Representative: Kuhnen & Wacker Patent- und Rechtsanwaltsbüro PartG mbB
(86) International application number: PCT/JP2024/043027
(87) International publication number: WO 2025/126941

(57) **Abstract**

A stator (20) includes a stator core (21). The stator core (21) has an annular portion (21a) and teeth (21b). The teeth (21b) extend inward in a radial direction of the annular portion (21a) from the annular portion (21a). The teeth (21b) are arranged in a circumferential direction of the annular portion (21a). A winding (23) is wound around the teeth (21b). A molding resin (24) is formed in an annular shape. The molding resin (24) covers an end portion (21c) of the stator core (21) in an axial direction. The molding resin (24) seals a portion of the winding (23) that projects from the end portion (21c). An outer peripheral surface (21d) of the annular portion (21a) has a recess (21e). The recess (21e) extends in the axial direction from the end portion (21c). The recess (21e) is recessed inward in the radial direction. An outer peripheral surface (24a) of the molding resin (24) has a resin recess (24b). The resin recess (24b) is recessed inward in the radial direction. The resin recess (24b) does not overlap with the recess (21e) when viewed in the axial direction.

## Description

### CROSS REFERENCE TO RELATED APPLICATION

This application is based on Japanese Patent Application No. 2023-209469 filed on December 12, 2023, the contents of which are incorporated herein by reference.

### TECHNICAL FIELD

The present disclosure relates to a stator and a motor.

### BACKGROUND

Conventionally, as a stator for a motor, the stator includes a stator core, windings, and molding resin (see, Patent Literature 1). This stator core has an annular portion and teeth extending radially inward from the annular portion in a circumferential direction. The winding is wound around the teeth. The molding resin is formed in an annular shape so as to cover axial end portions of the stator core, thereby sealing the windings protruding from the axial end portions of the stator core, namely, coil ends. In such a stator, for example, it is possible to ensure displacement prevention and insulation of the coil ends.

In addition, as a stator core, there are those having a recess on an outer circumferential surface of the annular portion (see, Patent Literature 1). The recess is provided, for example, at a circumferential position where the teeth are formed, which is a region having little influence on a magnetic circuit. In a stator using such a stator core, for example, weight reduction can be achieved.

### PRIOR ART LITERATURE

### PATENT LITERATURE

Patent Literature 1: JP 2022-184651 A
Patent Literature 2: JP 7026811 B

### SUMMARY OF THE INVENTION

When molding a resin using a molding die for a stator core having a recess as described above, it is necessary to reduce an outer diameter of the molded resin in order to prevent the molten resin from flowing into the recess. If the molten resin flows into the recess, the molten resin will further leak radially outward from the recess, causing a part of the molded resin to protrude radially outward from the annular portion. This may, for example, cause a reduction in the fixing force due to a portion of the molded resin entering between a housing, which is fixed to the outer peripheral surface of the annular portion by shrink fitting, and the annular portion. Furthermore, if the outer diameter of the molded resin is reduced, a housing member containing the winding, which is sealed by the molded resin, can only be sealed within a limited area. Furthermore, if the outer diameter of the molded resin is reduced, a housing member containing the winding, which is sealed by the molded resin, cannot be securely sealed.

An object of the present disclosure is to provide a stator and a motor in which a housing member can be securely sealed over a wide area while reducing a protrusion of a molded resin.

In a first aspect of the present disclosure, a stator includes a stator core. The stator core has an annular portion and teeth. The teeth extend inward in a radial direction of the annular portion from the annular portion. The teeth are arranged in a circumferential direction of the annular portion. A winding is wound around the teeth. A molding resin is formed in an annular shape. The molding resin covers an end portion of the stator core in an axial direction. The molding resin seals a portion of the winding that projects from the end portion. An outer peripheral surface of the annular portion has a recess. The recess extends in the axial direction from the end portion. The recess is recessed inward in the radial direction. An outer peripheral surface of the molding resin has a resin recess. The resin recess is recessed inward in the radial direction. The resin recess does not overlap with the recess when viewed in the axial direction.

According to this configuration, since the outer peripheral surface of the molding resin has the resin recess that is recessed radially inward so as not to overlap the recess of the annular portion as viewed in the axial direction, it is possible to reduce molten resin from flowing into the recess when the molten resin is poured using a molding die. Accordingly, it is possible to prevent the molten resin from further leaking radially outward from the recess, and thus, it is also possible to prevent a portion of the molding resin from protruding radially outward of the annular portion. As a result, for example, it is possible to reduce a reduction in fixing force caused by a portion of the molding resin entering between the housing, which is fixed to the outer circumferential surface of the annular portion by shrink fitting, and the annular portion. In addition, at circumferential positions where the resin recess is not formed, the outer peripheral surface of the molding resin can be made larger in the radial direction. Accordingly, for example, a housing member including the winding sealed by the molding resin 24 can be sealed over a wide range partially extending to the radial outside, and can also be sealed securely.

In a second aspect of the present disclosure, a motor includes the stator and a rotor that is rotatably supported and disposed to face the tips of the teeth. According to this configuration, the above-mentioned effects can be obtained in the motor.

### BRIEF DESCRIPTION OF DRAWINGS

The above and other objects, features and advantages of the present disclosure will become more apparent from the following detailed description made with reference to the accompanying drawings.
FIG. 1 is a schematic configuration diagram of a motor according to a first embodiment.
FIG. 2 is a perspective view of a divided core according to the first embodiment.
FIG. 3 is an enlarged plan view of a portion of the stator according to the first embodiment.
FIG. 4 is an enlarged plan view of a portion of the stator according to the first embodiment.
FIG. 5 is a partial cross-sectional view of the stator according to the first embodiment.

### DETAILED DESCRIPTION

Hereinafter, a first embodiment of the present disclosure will be described with reference to the drawings. In the drawings, for convenience of explanation, part of the configuration may be shown exaggerated or simplified. In addition, a dimensional ratio of each component may be different from the actual dimensional ratio.

### [Configuration of Motor 10]

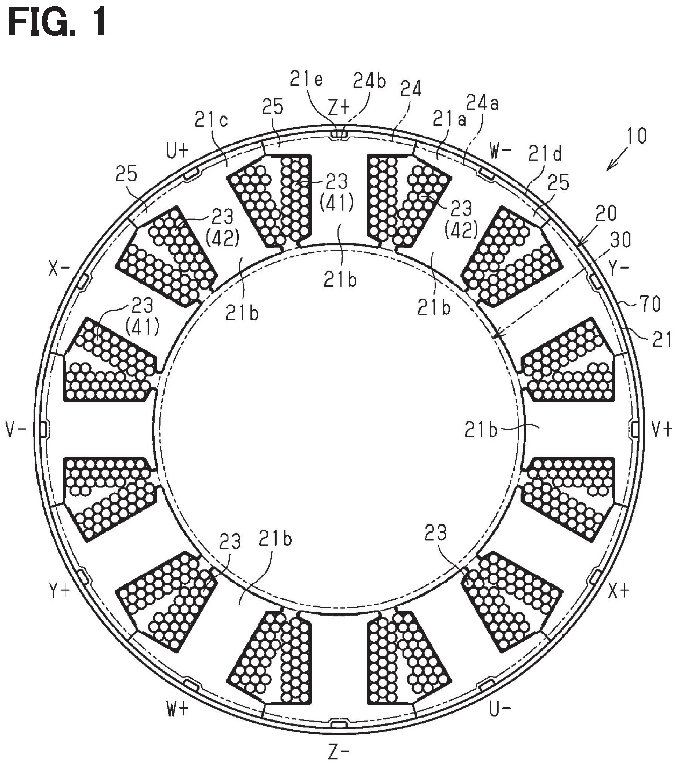

As shown in FIG. 1, a motor 10 includes a stator 20 and a rotor 30. Further, the motor 10 is provided with a first inverter circuit and a second inverter circuit (not shown), each capable of independently generating three-phase alternating currents with phases differing by 120 degrees. For example, the first inverter circuit is capable of generating a first system of three-phase alternating currents having X-phase, Y-phase, and Z-phase. The second inverter circuit is capable of generating a second system of three-phase alternating currents having U-phase, V-phase, and W-phase.

### [Configuration of Stator 20]

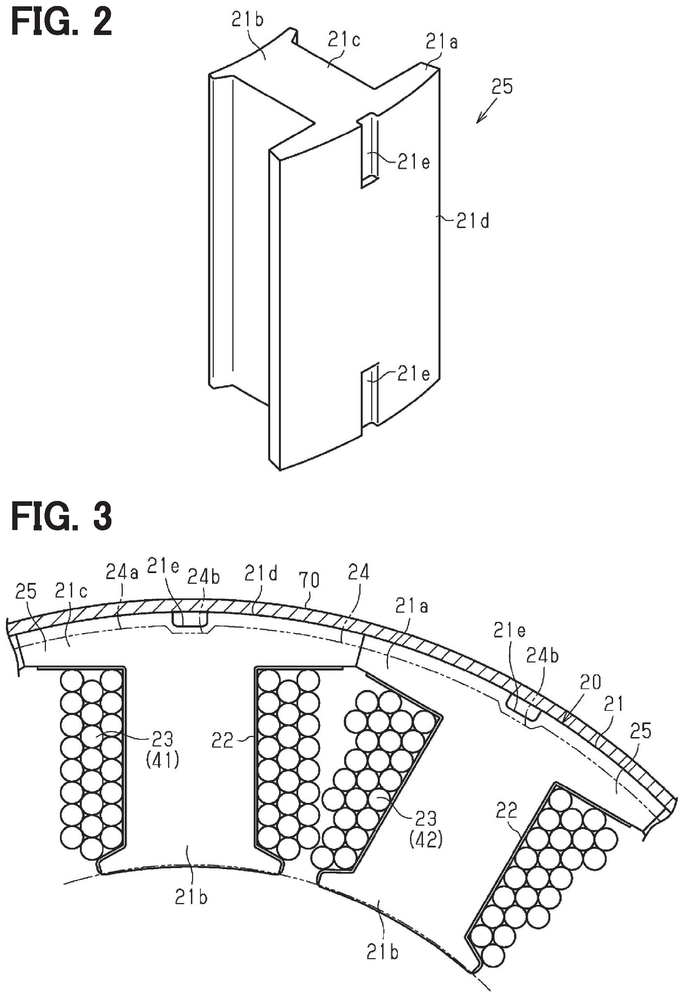

As shown in FIG. 3, the stator 20 includes a stator core 21, an insulator 22, a winding 23, and a molding resin 24. FIGS. 1 and 3 schematically illustrate cross sections of the insulator 22 and the winding 23. The stator core 21 includes segment cores 25 (see FIG. 2) that are divided in the circumferential direction. In the present embodiment, the stator core 21 has twelve segment cores 25. The stator core 21 has an annular portion 21a and teeth 21b, which extend inward from the annular portion 21a in a radial direction and are arranged in the circumferential direction. The teeth 21b are provided for each segment core 25. The insulator 22 is attached so as to cover the teeth 21b. The winding 23 is wound around the teeth 21b via the insulator 22 in a concentrated manner.

### [Detailed Configuration of Winding 23]

The winding 23 includes first system windings 41, to which three-phase AC currents of the first system (X-phase, Y-phase, and Z-phase) are supplied, and second system windings 42, to which three-phase AC currents of the second system (U-phase, V-phase, and W-phase) are supplied. The first system windings 41 and the second system windings 42 are alternately arranged in the circumferential direction. That is, the winding 23 includes six first system windings 41, namely, X+, X-, Y+, Y-, Z+, and Z-. Additionally, the winding 23 includes six second system windings 42, namely, U+, U-, V+, V-, W+, and W-. In addition, "+" and "-" represent forward and reverse winding.

Then, for example, as shown in FIG. 1, the winding 23 is arranged such that the first system windings 41 and the second system windings 42 are alternately disposed in the circumferential direction in the following order of Z+, W-, Y-, V+, X+, U-, Z-, W+, Y+, V-, X-, U+.

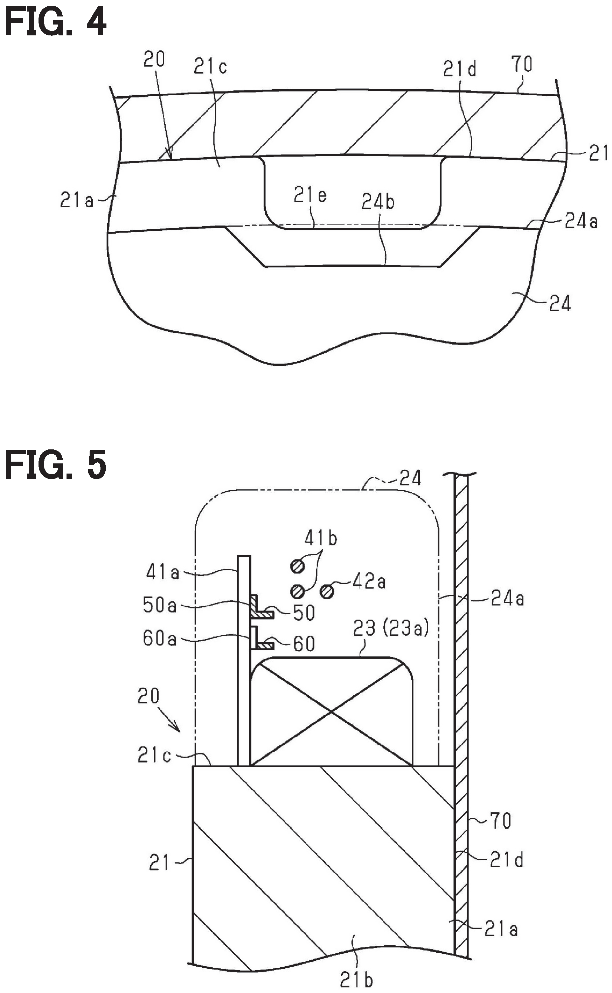

Additionally, as shown in FIG. 5, the stator 20 includes a first terminal 50 and a second terminal 60.

### [Configuration of First Terminal 50 and Second Terminal 60]

The first terminal 50 and the second terminal 60 are each formed in a circular shape from a conductive metallic material. In the present embodiment, the first terminal 50 and the second terminal 60 are formed in a perfectly circular shape.

Further, the first terminal 50 and the second terminal 60 are disposed at positions that are offset in the axial direction with respect to a coil end 23a, which is the winding 23 protruding from an axial end portion 21c of the stator core 21. Furthermore, the first terminal 50 and the second terminal 60 are arranged at different positions in the axial direction. In the present embodiment, the first terminal 50 and the second terminal 60 each have connecting portions 50a and 60a, which extend in the axial direction from the annular portion and are arranged in the circumferential direction.

The connecting portion 50a of the first terminal 50 is connected to a first neutral wire 41a, which is one of the terminal wires of the first system windings 41. Further, a second neutral wire (not shown), which is one of the terminal wires of the second system winding 42, is connected to the connecting portion 60a of the second terminal 60. In FIG. 5, a state in which one first neutral wire 41a is connected to one connecting portion 50a of the first terminal 50 is schematically illustrated, while a state in which the second neutral wire is connected to the connecting portion 60a of the second terminal 60 is not shown.

The other terminal wire of the first system windings 41, namely a first power supply wire 41b, is routed circumferentially at a position displaced in the axial direction with respect to the coil end 23a, then drawn out in the axial direction, and connected to a first inverter circuit (not shown). Further, the other terminal wire of the second system winding 42, namely a second power supply wire 42a, is routed circumferentially at a position displaced in the axial direction with respect to the coil end 23a, then drawn out in the axial direction, and connected to a second inverter circuit (not shown). In FIG. 5, two first power supply wires 41b routed circumferentially and one second power supply wire 42a routed circumferentially are illustrated.

### [Configuration of Molding Resin 24]

The molding resin 24 is formed in an annular shape so as to cover the axial end portion 21c of the stator core 21, and seals the coil end 23a, which is the winding 23 protruding from the axial end (end portion) 21c of the stator core 21. More specifically, the molding resin 24 seals a housing member that includes the coil end 23a. In addition to the coil end 23a, the housing member includes, for example, the first terminal 50, the second terminal 60, the first power supply wire 41b routed circumferentially, the second power supply wire 42a routed circumferentially, and components (not shown) that maintain spacing between these elements.

The molding resin 24 is formed using a molding die (not shown). That is, the molding resin 24 is formed by pouring molten resin into the molding die fixed to the stator core 21, and allowing the molten resin to cure.

The annular portion 21a of the stator core 21 in the stator 20 configured as described above is fixed to the cylindrical housing 70. The housing 70 of the present embodiment is fixed to an outer circumferential surface 21d of the annular portion 21a by shrink fitting.

### [Detailed Structure of Stator Core 21 and Molding Resin 24]

As shown in FIGS. 3 and 4, the outer circumferential surface 21d of the annular portion 21a of the stator core 21 is provided with a recess 21e that is recessed radially inward while extending in the axial direction from the axial end portion 21c of the stator core 21. The recess 21e is provided at a circumferential position where the teeth 21b are formed, which is a region that has little effect on a magnetic circuit. More specifically, the recess 21e is provided at a center position in the circumferential direction where the teeth 21b are formed. Furthermore, in the present embodiment, the recess 21e is formed in a substantially rectangular shape when viewed in the axial direction of the stator 20.

Furthermore, as shown in FIG. 2, the recesses 21e in the present embodiment are formed at both ends of the stator core 21 in the axial direction. That is, in the present embodiment, the recesses 21e are not formed at a middle area in the axial direction of the stator core 21.

Then, as shown in FIGS. 3 and 4, an outer peripheral surface 24a of the molding resin 24 is provided with a resin recess 24b, which is recessed radially inward so as not to overlap with the recess 21e when viewed in the axial direction of the stator 20.

As shown in FIG. 4, an outermost diameter portion of the molding resin 24 is set radially outward of a radial position of a bottom of the recess 21e. In FIG. 4, the radial position of the outermost diameter portion of the molding resin 24 is schematically indicated by a two-dot chain line. Furthermore, the outermost diameter portion of the molding resin 24 is set radially inward of the outermost diameter portion of the annular portion 21a.

The resin recess 24b is provided such that, when viewed in the axial direction of the stator 20, the molding resin 24 is separated from the recess 21e by at least a certain distance. In other words, the resin recess 24b is provided such that, when viewed in the axial direction of the stator 20, the axial end portion 21c of the stator core 21 is continuously connected and exposed over the entire circumference on the radially outer side of the stator core 21. The axial end portion 21c, which is continuously connected and exposed over the entire circumference of the stator core 21, serves as the surface that comes into contact with the forming mold used when molding the molding resin 24.

### [Configuration of Rotor 30]

As shown in FIG. 1, the rotor 30 is disposed radially inside the stator 20 so as to face tips of the teeth 21b, and is rotatably supported. The rotor 30 has permanent magnets (not shown) arranged in the circumferential direction.

### [Actions of First Embodiment]

Next, the operation of the motor 10 configured as above will be described.

The motor 10 includes the first inverter circuit and the second inverter circuit. In addition, the winding 23 of the stator 20 includes the first system windings 41 to which the first three-phase AC current from the first inverter circuit is supplied, and the second system windings 42 to which the second three-phase AC current from the second inverter circuit is supplied. Accordingly, the motor 10 can be driven by at least one of the first system windings 41 and the second system windings 42, thereby providing redundancy.

Further, the molding resin 24 is annularly formed so as to cover the axial end portion 21c of the stator core 21 and seals the winding 23, that is, the coil end 23a, which protrudes from the axial end portion 21c of the stator core 21. Accordingly, displacement of the coil end 23a can be prevented and insulation of the coil end 23a can be ensured. Furthermore, since the outer circumferential surface 21d of the annular portion 21a of the stator core 21 has the recess 21e, the stator 20 can be made lighter, for example.

### [Effects of First Embodiment]

Next, the effects of the present embodiment are described below.

The outer peripheral surface 24a of the molding resin 24 is provided with the resin recess 24b that is recessed radially inward so as not to overlap with the recess 21e of the annular portion 21a when viewed in the axial direction. Accordingly, when molten resin is poured using a mold to form the molding resin 24, it is possible to prevent the molten resin from flowing into the recess 21e of the annular portion 21a. Accordingly, it is possible to prevent the molten resin from further leaking radially outward from the recess 21e, and thus, it is also possible to prevent a portion of the molding resin 24 from protruding radially outward of the annular portion 21a. As a result, for example, it is possible to reduce a reduction in fixing force caused by a portion of the molding resin 24 entering between the housing 70, which is fixed to the outer circumferential surface 21d of the annular portion 21a by shrink fitting, and the annular portion 21a. In addition, at circumferential positions where the resin recess 24b is not formed, the outer peripheral surface 24a of the molding resin 24 can be made larger in the radial direction. Accordingly, for example, the winding 23 sealed by the molding resin 24, specifically, a housing member including the coil end 23a, can be sealed over a wide range partially extending to the radial outside, and can also be sealed securely. More specifically, it is possible to securely seal the housing members for the coil end 23a, the first terminal 50, the second terminal 60, the first power wire 41b routed in the circumferential direction, the second power wire 42a routed in the circumferential direction, and components (not shown) that maintain the spacing between them.

Since the outermost diameter portion of the molding resin 24 is set further toward the radial outside than the radial position of the bottom of the recess 21e, the housing member including the coil end 23a can be sealed over a wider range that extends further to the radial outside, and can be sealed more securely.

Since the outermost diameter portion of the molding resin 24 is set further toward the radial inside than the outermost diameter portion of the annular portion 21a, it is possible to reduce the molten resin from leaking to the radial outside beyond the outermost diameter portion of the annular portion 21a when pouring the molten resin using a forming mold. Accordingly, it is possible to prevent a portion of the molding resin 24 from protruding to the radial outside of the annular portion 21a. As a result, for example, it is possible to reduce a reduction in fixing force caused by a portion of the molding resin 24 entering between the housing 70, which is fixed to the outer circumferential surface 21d of the annular portion 21a by shrink fitting, and the annular portion 21a.

The winding 23 has the first system windings 41 to which current of the first system is supplied, and the second system windings 42 to which current of the second system is supplied. Accordingly, for example, a greater number of housing components to be sealed with the molding resin 24 tends to be required, such as respective neutral point terminals, that is, the first terminal 50 and the second terminal 60, and components (not shown) for maintaining the spacing between them. Accordingly, the effects of the present embodiment, which allows the housing member to be sealed over a wide area extending partially to the radial outside, becomes even more effective.

### Modifications

The above described embodiments may be modified as follows. The above described embodiments and the following modifications can be implemented in combination with one another as long as there is no technical contradiction.

In the above embodiment, the outermost diameter portion of the molding resin 24 is set radially outward of the radial position of the bottom of the recess 21e, but it is not limited thereto. That is, the outermost diameter portion of the molding resin 24 may be set at the same radial position as the bottom of the recess 21e, or may be set radially inward of the radial position of the bottom of the recess 21e.

In the above embodiment, the outermost diameter portion of the molding resin 24 is set radially inward of the outermost diameter portion of the annular portion 21a, but it is not limited thereto. For example, the outermost diameter portion of the molding resin 24 may be set at the same radial position as the outermost diameter portion of the annular portion 21a.

In the above embodiment, the winding 23 is described as having the first system windings 41 to which the first system current is supplied, and the second system windings 42 to which the second system current is supplied, but it is not limited thereto. For example, the stator 20 may be configured with only the winding 23 to which electric current of a single system is supplied.

In the above embodiment, the recess 21e is described as being formed in a substantially rectangular shape when viewed in the axial direction of the stator 20, but it is not limited thereto and may be formed in other shapes. Further, as long as the resin recess 24b is provided such that, when viewed in the axial direction of the stator 20, the molding resin 24 is separated from the recess 21e by a certain distance or more, it may be formed in other shapes.

In the above embodiment, the recess 21e is described as being provided at the center position in the circumferential direction where the tooth 21b is located, but it is not limited thereto. It may be provided at a different position, or recesses may be provided for a single tooth 21b.

In the above embodiment, the recess 21e is described as being provided at both axial ends of the stator 20. However, it is not limited thereto. For example, the recess 21e may be provided over the entire axial direction of the stator core 21 on the outer circumferential surface 21d of the annular portion 21a.

In the above embodiment, the stator core 21 is described as being composed of divided cores 25. However, it is not limited thereto. That is, the stator core 21 may also be one in which the annular portion 21a is continuous over the entire circumference.

In the above embodiment, the stator 20 has twelve teeth 21b. However, it is not limited to this configuration and may, for example, has twenty-four or any other number of teeth 21b.

In the above embodiment, the housing 70 is fixed to the outer circumferential surface 21d of the annular portion 21a by shrink fitting. However, it is not limited to this, and may be fixed by other means.

The present disclosure has been described based on examples, but it is understood that the present disclosure is not limited to the examples or structures. The present disclosure encompasses various modifications and variations within the scope of equivalents. Furthermore, various combination and formations, and other combinations and formations including one, more than one or less than one element are also within the scope of the present disclosure.

The features of the present disclosure are as follows.
[1] A stator (20) comprising:
   a stator core (21) having an annular portion (21a) and teeth (21b) extending inward in a radial direction of the annular portion from the annular portion and arranged in a circumferential direction of the annular portion;
   a winding (23) wound around the teeth; and
   a molding resin (24) formed in an annular shape to cover an end portion (21c) of the stator core in an axial direction and sealing a portion of the winding that projects from the end portion, wherein

   an outer peripheral surface (21d) of the annular portion has a recess (21e) that extends in the axial direction from the end portion and is recessed inward in the radial direction, and
   an outer peripheral surface (24a) of the molding resin has a resin recess (24b) recessed inward in the radial direction such that the resin recess dose not overlap with the recess when viewed in the axial direction.
[2] The stator according to [1], wherein
   an outermost diameter portion of the molding resin is located outward in the radial direction relative to a bottom of the recess.
[3] The stator according to [1] or [2], wherein
   an outermost diameter portion of the molding resin is located inward in the radial direction relative to an outermost diameter portion of the annular portion.
[4] The stator according to any one of [1] to [3], wherein
   the winding includes:
   first system windings (41) configured to receive a first system current; and
   second system windings (42) configured to receive a second system current.
[5] A motor (10) comprising:
   the stator according to any one of [1] to [4]; and
   a rotor (30) rotatably supported and arranged to face tips of the teeth.

## Claims

1. A stator (20) comprising:
a stator core (21) having an annular portion (21a) and teeth (21b) extending inward in a radial direction of the annular portion from the annular portion and arranged in a circumferential direction of the annular portion;
a winding (23) wound around the teeth; and
a molding resin (24) formed in an annular shape to cover an end portion (21c) of the stator core in an axial direction and sealing a portion of the winding that projects from the end portion, wherein
an outer peripheral surface (21d) of the annular portion has a recess (21e) that extends in the axial direction from the end portion and is recessed inward in the radial direction, and
an outer peripheral surface (24a) of the molding resin has a resin recess (24b) recessed inward in the radial direction such that the resin recess dose not overlap with the recess when viewed in the axial direction.

2. The stator according to claim 1, wherein
an outermost diameter portion of the molding resin is located outward in the radial direction relative to a bottom of the recess.

3. The stator according to claim 1, wherein
an outermost diameter portion of the molding resin is located inward in the radial direction relative to an outermost diameter portion of the annular portion.

4. The stator according to claim 1, wherein
the winding includes:
first system windings (41) configured to receive a first system current; and
second system windings (42) configured to receive a second system current.

5. A motor (10) comprising:
the stator according to any one of claims 1 to 4; and
a rotor (30) rotatably supported and arranged to face tips of the teeth.
